# EUROPEAN PATENT SPECIFICATION

(11) **EP 0 650 543 B1**
(45) Date of publication and mention of the grant of the patent: **26.03.1997**
(21) Application number: 93912682.7
(22) Date of filing: 09.06.1993
(51) Int. Cl.: D21J 7/00

(54) **METHOD AND PLANT FOR THE CONTINUOUS PRODUCTION OF OBJECTS FROM PULP MATERIAL**
VERFAHREN UND VORRICHTUNG ZUM KONTINUIERLICHEN FORMEN VON GEGENSTÄNDEN AUS PAPIERBREI
PROCEDE ET INSTALLATION POUR LA PRODUCTION EN CONTINU D'OBJETS A PARTIR DE MATERIAU EN PATE

(30) Priority: 10.06.1992 DK 763/92
(43) Date of publication of application: 03.05.1995
(73) Proprietor: BRODRENE HARTMANN A/S, DK-2800 Lyngby (DK)
(72) Inventor: JENSEN, Joergen, Dyrlund, DK-2000 Frederiksberg (DK)
(74) Representative: Roerboel, Leif
(86) International application number: DK9300197
(87) International publication number: WO9325755

(56) References cited:
- DE-A- 1 436 949
- US-A- 3 553 079

## Description

### TECHNICAL FIELD

The present invention relates to a method for the continuous production of objects from pulp material, said method being of the kind set forth in the preamble of claim 1.

In the present connection, the term "pulp material" is to be understood as applying to a fiber-containing pulp mass, that may also contain or consist of waste paper.

### BACKGROUND ART

In the continuous mass production of objects from pulp material it is known to use a moulding machine with a rotating mould carrier, on the periphery of which suction moulds are placed side by side, said moulds being periodically immersed in a pulp mass during the rotation of the mould carrier, so that a layer of pulp mass can be deposited on the suction moulds by applying suction to them during their passage through the pulp mass. When the moulds subsequently again are lifted free of the pulp mass, the moist blanks or preforms thus produced are removed from the suction mould, partly by blowing air through the latter, partly by aspirating the blanks or preforms onto corresponding counter-moulds placed on the periphery of a pressing rotor, the axis of which is parallel to the axis of the mould carrier, and facing the latter.

From this latter rotor, the blanks or preforms are transferred to supporting and conveying means adapted to convey the blanks or preforms having been transferred through a drying apparatus. It is not possible with suction-moulding wet material to produce objects immediately having their precise final shape. Hence, with this in itself rational method of production, it is normally necessary to carry out a subsequent finishing treatment of each individual dried blank or preform, e.g. by a post-pressing operation, an edge-cutting operation, imprinting and the like.

In automatically operating plants, in the present connection being the rule rather than the exception, if an economically justifiable production is to be achieved, the conveying of the blanks or preforms towards and between the individual work stations and the processing of the blanks or preforms in the latter must be performed individually at the production rate. This has especially shown itself to be a disadvantage, when the suction-moulding method is to be utilized in a rational manner, not only for the mass production of objects with relatively large surfaces, such as the well-known egg trays, but also for the production of small objects, e.g. planting pots of the kind used by gardeners for planting-out operations, as conveying and processing the blanks or preforms individually in this case can make it difficult to maintain economically justifiable production rates.

### US-A-3.553.079 (Lloyd Hornbostel, Jr.):

This document relates to suction moulding of planting blocks by aspirating a pulp mass in a suction mould. In the latter, a common blank 10 consisting of a number of single units 12 is formed, said units 12 being interconnected by connecting bridge sections 13. Later, the common blank 10 is dried while still in the mould, cf. col. 5, lines 32-36. After this drying, the common blank 10 is removed from the mould, and is then ready for use in actual practice.

The recesses 14 in each of the units 12 of the common blank 10, now constituting a "multiple planting block", are now filled with seeds. In the beginning of the growth period, the common blank 10 is preserved as an integral unit, but if a later re-potting or planting-out were to make it necessary to subdivide the multiple block 10 into its individual elements 12, this sub-dividing can be performed by severing the connecting bridge sections 13, cf. col. 3, lines 7-10, and col. 6, lines 3-8. This sub-dividing does, however, have no relation to the block manufacturing process as such.

### DE-A-1.436.949 (Skandinavisk Emballage):

This document relates to the simultaneous production of a number of similarly shaped objects by aspirating a pulp mass in a suction mould, said objects being placed with their edges adjacent to each other and interconnected by a material layer 12, 14 with reduced thickness. In this manner, weakening lines are formed, along which it is subsequently possible to separate the objects from each other. No bridge system provided by bridge elements is performed which subsequently to the blank or preforms manufacturing process is to be removed from the processing line.

### DISCLOSURE OF THE INVENTION

On the above background, it is the object of the present invention to provide a method of the kind referred to initially, with which it is possible in an economically justifiable manner to produce not only objects of equal shape and size, but also objects of different shapes and sizes from pulp material, and further make the requisite plant more flexible with regard to rational production of both large and relatively small quantities of objects on one and the same plant. This object is achieved by according to the present invention to proceed as set forth in the characterizing clause of claim 1.

By proceeding in this manner, a large variety of blanks or preforms are formed ready for further processing while still constituting parts of a considerably larger integral body, that can be conveyed towards and between the individual work stations and processed in all of these or in some selected ones. By giving this larger, integral body a mould-surface size equal to the size necessary for producing the largest object desired, it is achieved that one and the same plant, merely by exchanging the moulds, can be used in an economical justifiable manner for mass-producing both large and small quantities of both large and small finished objects.

Proceeding in the manner set forth in claim 2 makes it possible to take into consideration that the dried blanks or preforms, whether constituting a single object or each comprising a plurality of objects, will not be deformed while being conveyed, at the same time making it possible to let the various objects have different heights.

Proceeding as set forth in claim 3 results in the advantage that the blanks or preforms, while being conveyed towards and between the work stations, are held in positions ensuring a uniform finishing treatment of each individual blank or preform. In that case, the integral body may be given the shape indicated in claim 4, with the result that the means required for the positive mechanically controlled conveying are placed outside of the blanks or preforms proper. The conveying movement may be in the nature of pushing, pulling or carrying. Claim 5 indicates an advantageous construction of a unitary grate structure formed from bridges interconnecting the individual blanks or preforms, said grate structure e.g. forming a frame with which the integral body can rest on the above-mentioned plane, continuous conveying surface during the conveying.

Not until the integral body has passed through all the work stations desired to be used for the finishing treatment, will the blanks or preforms, now processed into the finished objects, be liberated from the bridge connection, after which they can be packaged with a view to being dispatched.

The present invention also relates to a plant for carrying out the method according to the invention. This plant is of the kind set forth in the preamble of claim 5, and it is according to the invention characterized by the features set forth in the characterizing clause of claim 5.

The mode of operation of this plant, as well as the effects and the mode of operation of the embodiments of the method and the plant being set forth claims 2-4 and 6-7, respectively, will be evident from the following detailed portion of the present description.

### BRIEF DESCRIPTION OF THE DRAWINGS

In the following detailed portion of the present description, the invention will be explained in more detail with reference to the drawings, in which
Fig. 1 diagrammatically shows an embodiment of a complete plant according to the invention, and
Fig. 1A is a diagrammatic overall view of the work stations of the plant, whereas
Figs. 2-14 are illustrations showing exemplary embodiments of work stations sequentially constituting parts of the plant for stepwise finishing treatment and packaging of the objects being produced in the plant.

### DESCRIPTION OF THE PREFERRED EMBODIMENT

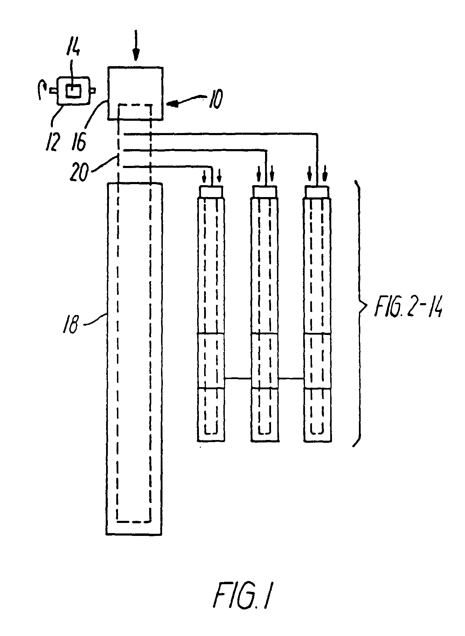

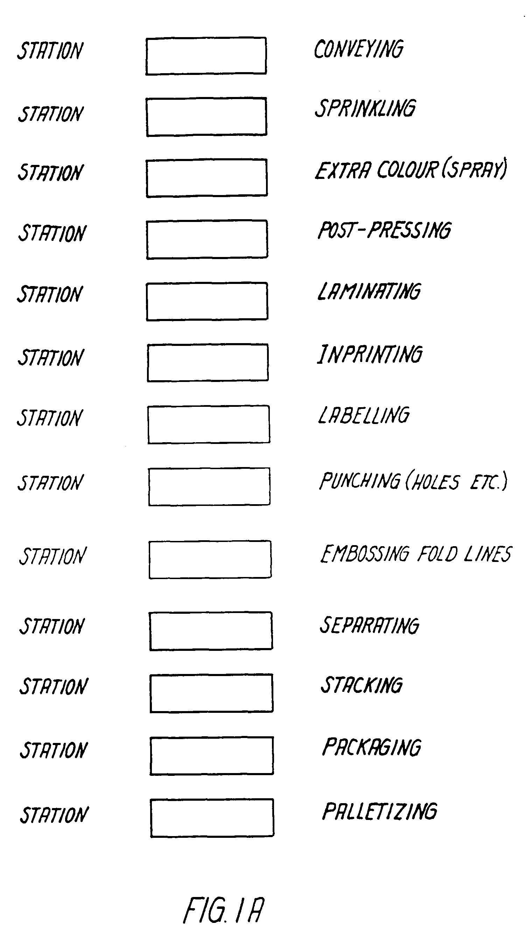

Fig. 1 shows diagrammatically a plant consisting of a suction-moulding station 10 for moulding blanks or preforms from pulp material. The station 10 comprises a rotatable mould carrier 12, on the outside of which are placed several liquid-permeable suction moulds 14 adapted to be connected with a source of sub-atmospheric and super-atmospheric pressure.

The mould carrier 12 is with a part of its circumferential surface immersed in a vessel 16 containing a fiber pulp. This pulp may be made from a fiber-containing raw material, including waste paper or cardboard.

During the immersion in the pulp mass, a layer of fiber material is deposited by suction on the mould surfaces of the suction mould 14. Subsequently, when the moulds 14 are lifted free out of the pulp vessel 16, the fiber layer having been deposited by suction is blown off from the suction mould 14 by supplying air under pressure to the latter. At the same time, the moist blank or preform is being aspirated onto a corresponding counter-mould (not shown) placed on the circumference of a pressing rotor (not shown) being placed with its axis parallel to the axis of the mould carrier 12 and facing the latter's periphery. From the pressing rotor, the moist blank or preform is blown off and laid on to a conveying track (not shown), on which the blank or preform is conveyed through a drying oven 18.

From the drying oven 18, the substantially or completely dried blank or preform is placed on a conveying surface 20, from which it is conveyed up to and passes a number of work stations for completing its processing.

The conveying surface 20 is formed as a plane continuous supporting surface, on which the blanks or preforms may be conveyed by being pushed or pulled or carried.

In the embodiment shown, the finishing line of the plant is divided into three mutually parallel part-lines, the total capacity of which is matched to the production capacity of the moulding station 10,12 and the drying station 18. In the example shown, the finishing line comprises various work stations, shown diagrammatically in the following Figures:

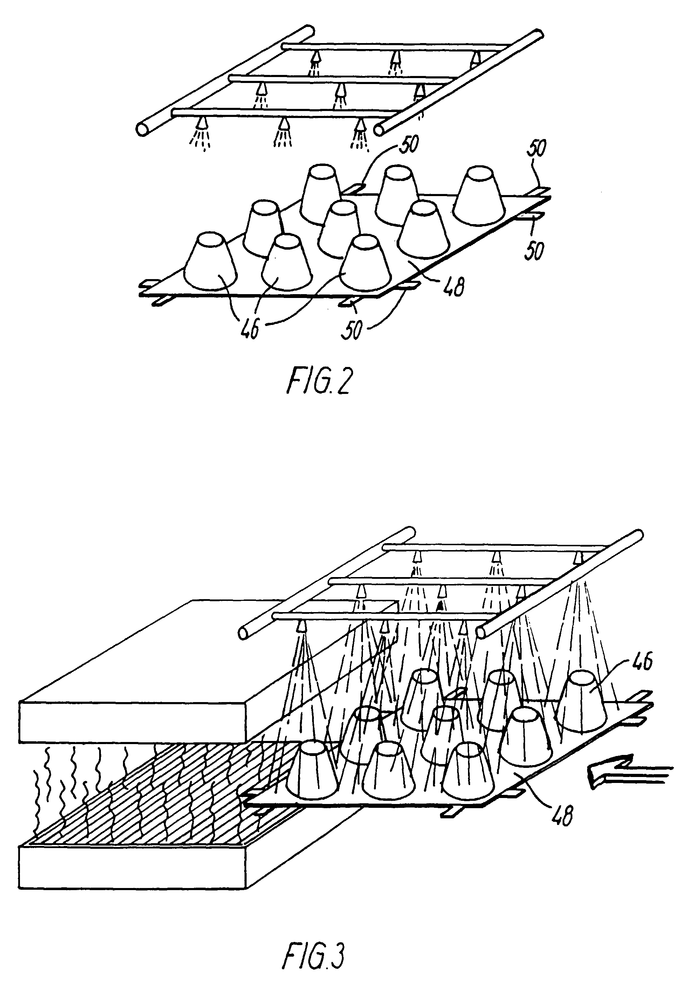

Fig. 2 shows a sprinkling station for moistening the surface of blanks or preforms with a view to making a subsequent post-pressing operation more effective,

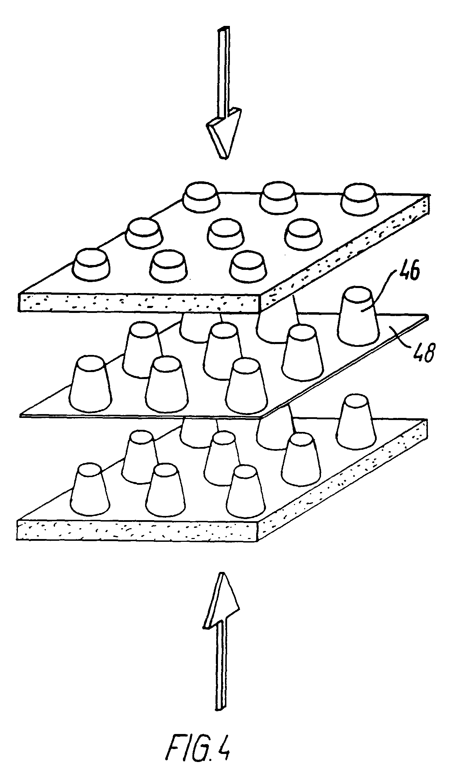

Fig. 3 shows a station for final sprinkling of the blanks or preforms with colouring matter, as well as an immediately adjacent drying section for quick drying of the colouring matter having been applied,
Fig. 4 shows a station for post-pressing of the blanks or preforms, e.g. in order to give the latter a well-defined final shape and/or to give them smooth outside surfaces, this possibly being an advantage, if later the blanks or preforms are to be provided with an imprint, a laminate or a label,

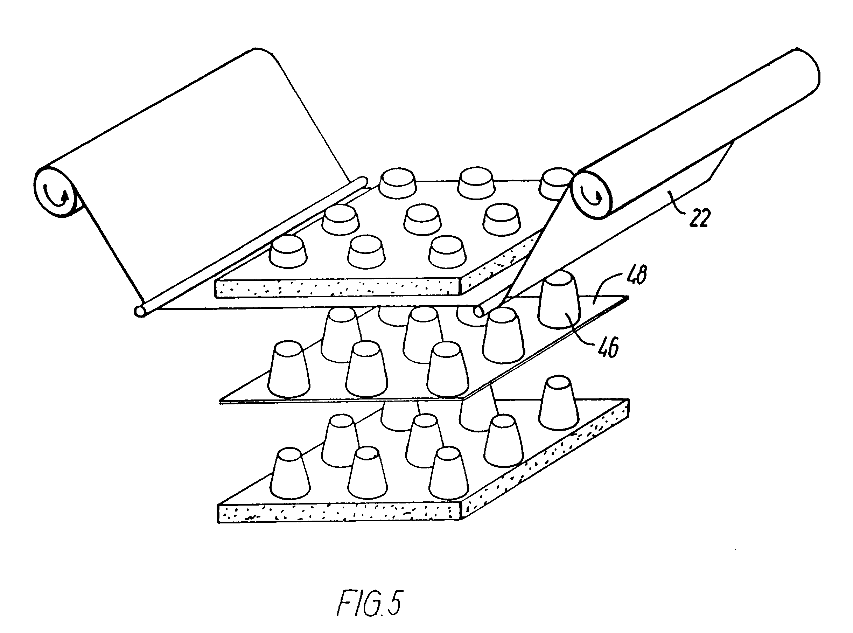

Fig. 5 shows a station for providing the blanks or preforms with a laminate 22,

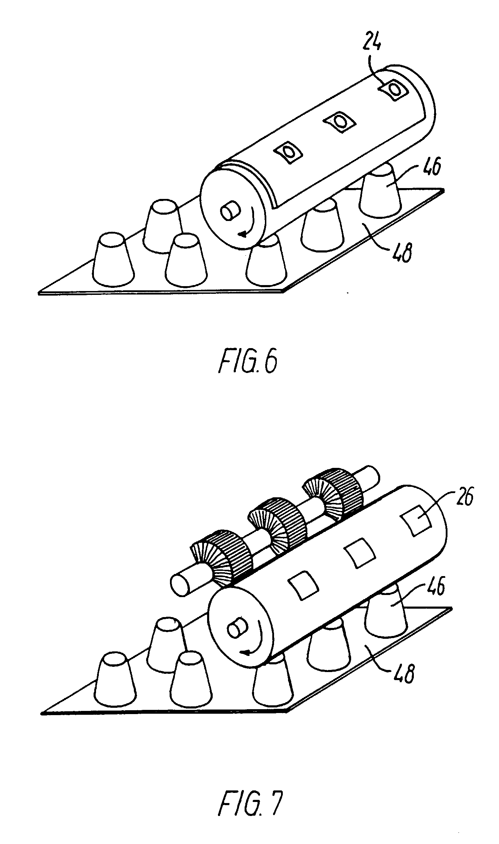

Fig. 6 shows a station providing the blanks or preforms with an imprint 24,

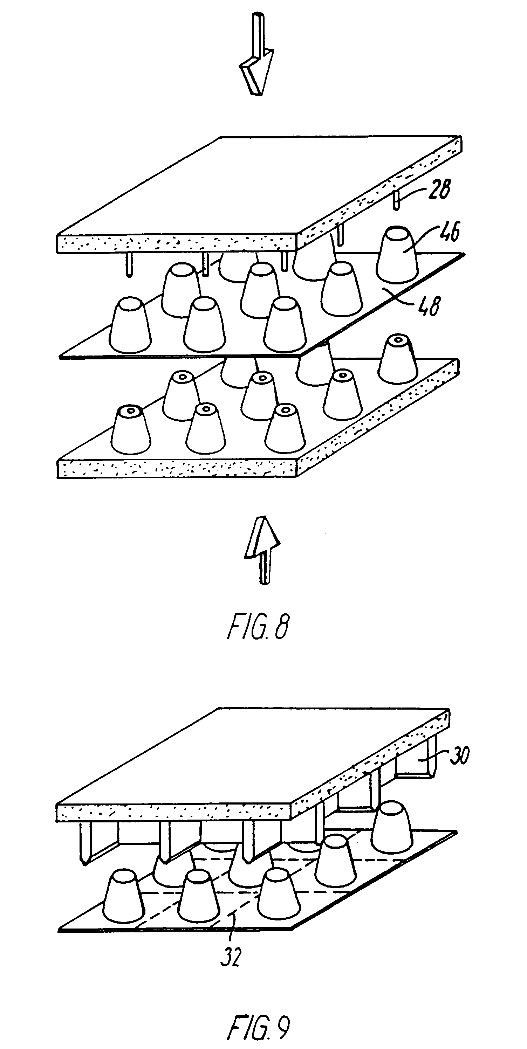

Fig. 7 shows a station providing blanks or preforms with a label 26,
Fig. 8 shows a station with tools 28 for punching holes in the blanks or preforms,

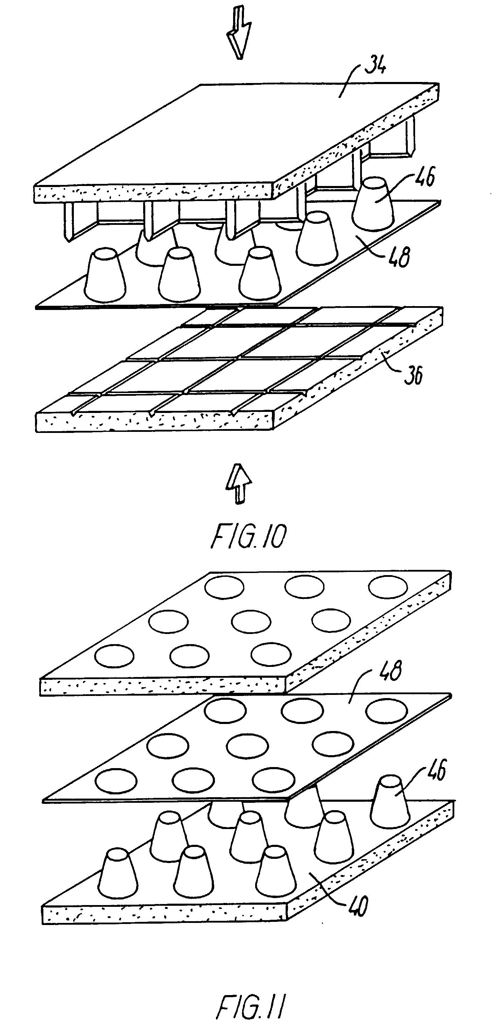

Fig. 9 shows a station with an embossing tool for forming fold lines 32,
Fig. 10 shows a station for separating the individual blanks or preforms by using a parting tool 34 and an abutment platen 36 or some other resilient base. The separation may be complete, e.g. all the way around the blanks or preforms, or partial, e.g. by making incisions solely along a part of the sides of the blanks or preforms.

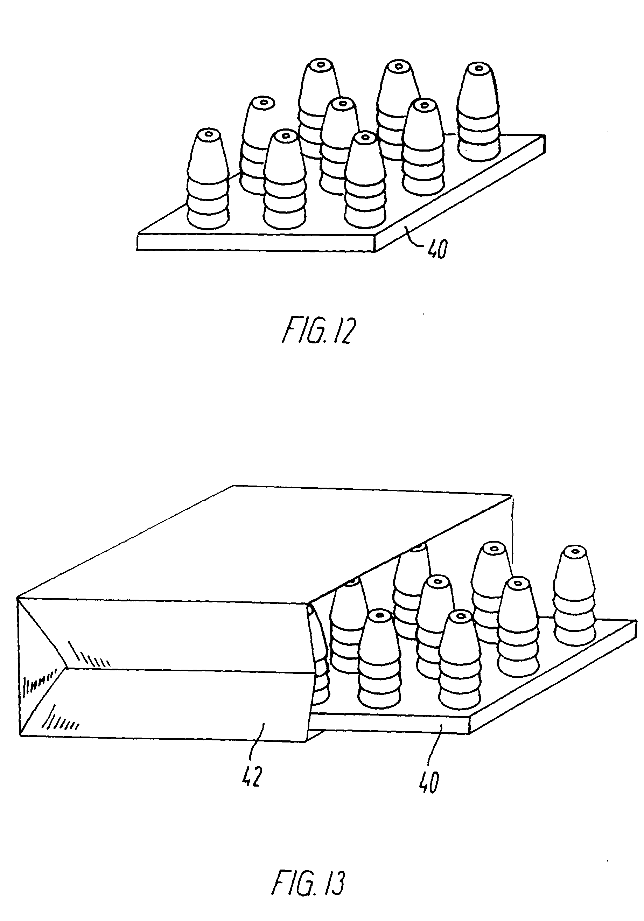

Fig. 11 shows the separation of the blanks or preforms 46 from a body 48, the latter until this point having held the blanks or preforms together as a bridge body. The liberated blanks or preforms are placed on a base 40.

Fig. 12 shows a number of blanks or preforms having been stacked successively on the base 40.

Fig. 13 shows the blanks or preforms having been stacked on the base 40 while being conveyed into a collecting bag 42.

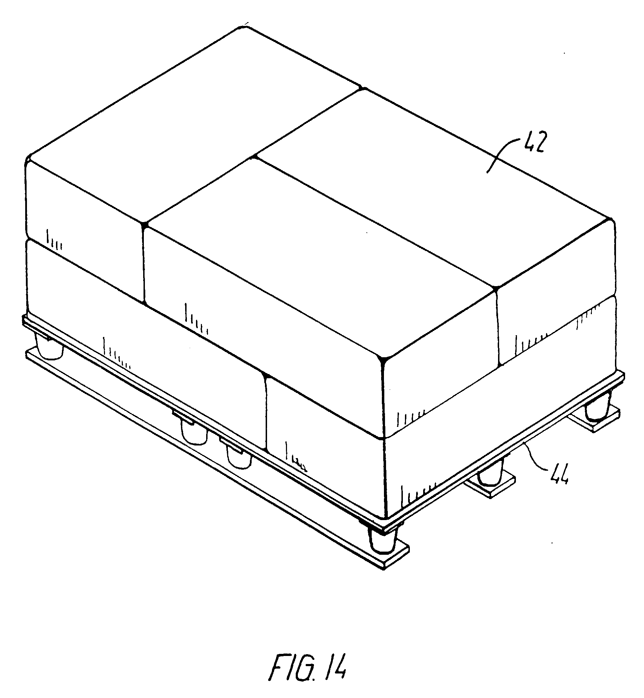

Fig. 14 shows a number of bags 42 collected on a pallet 44.

As will be evident from this explanation with associated drawings, in the plant according to the invention a number of blanks or preforms 46, in the present example planting pots, have been moulded in the suction-moulding station 10 in the form of a common continuous body with bridges interconnecting the blanks or preforms 46, said bridges for the sake of simplicity being shown in the form of a common bridge sheet 48 in the drawing. Instead of a common plate, the bridge connection may also be formed from ribs, and the bridge connection may also comprise a directly abutting connection between the mutually facing sides of two adjacent blanks or preforms 46.

The mechanical strength of the bridge system is such that the integral body 46,48 can be conveyed continuously to a number of work stations, each adapted to perform its own finishing operation as explained above. From this explanation it is also evident that each blank or preform 46 is or may be subjected to individual processing in each work station.

When the processing of the blanks or preforms 46 in an integral body is complete, the blanks or preforms are liberated from the bridge system through a separating process.

Likewise, the above explanation provides an example of the integral body 46,48 preferably being shaped in such a manner, that it - with a view to conveying it - can rest on a substantially plane and continuous conveying surface 20 without deformation being caused to the integral body as such or any of the individual blanks or preforms 46. In the example, this is achieved by giving the bridge sheet 48 the shape of a grid-like frame, with which the integral body 46,48 rests on the conveying surface 20 and is moved along the latter.

In order to ensure an effective control of the conveying of the integral body towards and through the various work stations, it is according to the invention advantageous to give the integral body 46,48 such a shape that it can be conveyed in a positively controlled manner between the work stations by means of suitable conveying means. For this purpose, the integral body 46,48 can be provided with laterally protruding tabs 50, vide e.g. Fig. 2, adapted to be engaged and moved by suitable conveying means, e.g. in the shape of gripping members, or else the integral body may be carried forward by suitable supporting and carrying members using the tabs 50.

In the manner described above, it is possible in a plant according to the invention to work e.g. with suction moulds having a base area of 400 x 600 mm. With this base size, the plant can be used for producing objects with large areas, such as egg trays. The same base size does, however, make it possible to produce objects each having a substantially smaller area size, but which in the manner indicated above can be produced as parts of integral bodies likewise having a base area corresponding to the above, for which reason it is sufficient to exchange suction moulds with the above-mentioned standard base area, if the production is to be changed from one type of object to another. Thus, the integral bodies can, in the same manner as products having a large area, be produced in an economically justifiable manner by suction moulding of a pulp material.

### LIST OF PARTS

10. Suction-moulding station
12. Rotable mould carrier
14. Suction mould
16. (Pulp) vessel
18. Drying oven/drying station
20. Conveying surface
22. Laminate
24. Imprint
26. Label
28. (Punching) tools
32. Fold lines
34. Parting tool
36. Abutment platen
40. Base
42. Collecting bag
44. Pallet 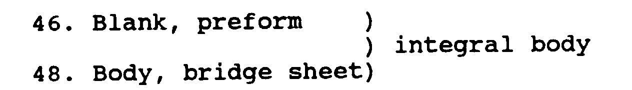
50. Tabs

## Claims

1. Method for the continous production of objects from a pulp material, said method comprising the steps of
a) moulding blanks or preforms of at least approximately the same shape as the finished objects by aspirating pulp mass against a liquid-permeable mould surface,
b) removal from the moulding surface and complete or partial drying of the blanks or preforms thus produced, and
c) final finishing processing of the completely or partially dried blanks or preforms so as to produce the final objects,
**characterized** in
d) that a combination of a plurality of blanks or preforms, and elements providing a bridge system interconnecting said blanks or preforms are moulded together as an integral body having a mechanical strength and a shape sufficient to allow it after having been removed from the mould surface and dried, to be conveyed in a positive manner by means of suitable conveying means through a processing line consisting of a number of work stations sequentially situated in the direction of conveying, each work station being adapted to perform its own finishing operation on the blanks or preforms constituting parts of each integral body, and to subsequently liberate the blanks or preforms from the bridge system interconnecting them and to remove the blanks or preforms and the bridge system elements from the processing line.

2. Method according to claim 1, **characterized** in that the integral body is given such a shape that it with a view to being conveyed can rest on a substantially plane and continous conveying surface or carried "floating" by suitable support means without deformation being caused to itself or the individual blanks or preforms.

3. Method according to claim 1, **characterized** in that for being conveyable in a positive manner, the integral body is moulded with laterally protruding tabs adapted to be gripped or engaged by conveying means in the form of gripping means.

4. Method according to any one or any of the claims 1-3, **characterized** in that at least some of the bridges interconnecting the blanks or preforms are given the shape of a continous, grid-like object.

5. Plant for the continous production of objects from pulp material while carrying out the method according any one or any of the claims 1-4 and of the kind comprising
a) at least one suction-moulding station (10,12) for moulding blanks or preforms (46) of at least approximately the same shape as the finished objects by aspirating pulp mass against a liquid-permeable moulding surface,
b) a drying station (18) for complete or partial drying of the blank or preform thus produced,
c) at least one work station for finishing processing of the final object, and
d) a conveying path (20) for conveying the blank or preform to the work station or stations,
**characterized** in
e) that the suction-moulding station (10,12) is adapted to produce integral bodies (46,48) each consisting of a plurality of blanks or preforms (46) mutually connected through bridges (48), said integral bodies being adapted to be conveyed along said conveying path (20),
f) that the work station or stations is/are adapted to finish-process blanks or preforms in each integral body simultaneously, the station or stations for this purpose comprising a number of working means corresponding to the number of blanks or preforms, said working means being placed in substantially the same configuration as the configuration of the blanks or preforms in the integral body and adapted to process the blanks or preforms substantially simultaneously, and
g) that the plant comprises at least one station (Fig. 10) adapted to disrupt the bridges with a view to liberating the individual finished-processed objects (46) from each other.

6. Plant according to claim 5, **characterized** in that the conveying path (20) is provided with conveying means adapted to hold the integral body and move the latter under positive mechanical control along the conveying path with the integral body resting on this path or on conveying support means.

7. Plant according to claim 5 or 6, **characterized** in that the disrupting station comprises means for stacking the individual objects produced by the liberating step.

## Patentansprüche

1. Verfahren zur kontinuerlichen Herstellung von Gegenständen aus einem Faserbreimaterial, bei welchem
a) Rohlinge oder vorgeformte Gegenstände von zumindest annährend der gleichen Gestalt wie die der fertigen Gegenstände durch ein Ansaugen von Breimasse gegen eine flüssigkeitsdurchlässige Formfläche geformt werden,
b) die dadurch hergestellten Rohlinge oder vorgeformten Gegenstände von der Formfläche entfernt und vollständig oder teilweise getrocknet werden, und
c) die vollständig oder teilweise getrockneten Rohlinge oder vorgeformten Gegenstände einer abschliessenden Bearbeitung zur Herstellung der endgültigen Gegenstände unterworfen werden,
**dadurch gekennzeichnet,**
d) dass eine Kombination aus einer Mehrzahl von Rohlingen oder vorgeformten Gegenstände und aus ein Brückensystem bildenden, die Rohlinge oder die vorgeformten Gegenstände miteinander verbindenden Elementen gemeinsam als ein zusammenhängender Körper geformt werden, der eine mechanische Stärke und eine Gestalt aufweist, die ausreicht, um den Körper, nach seiner Entfernung von der Formfläche und seiner Trockung, gesteuert mittels geeigneter Fortbewegungsorgane durch eine Fertigungslinie zu bewegen, die aus einer Anzahl von in der Fortbewegungsrichtung in Reihenfolge nacheinander angeordneten Arbeitsstationen besteht, wobei jede Arbeitsstation zur Durchführung ihrer abschliessenden Bearbeitung der Teile eines jeden zusammenhängenden Körpers bildenden Rohlinge oder der vorgeformten Gegenstände, und zu einer nachfolgenden Befreiung der Rohlinge oder vorgeformten Gegenstände von dem sie verbindenden Brückensystem und einer Entfernung der Rohlinge oder vorgeformten Gegenstände sowie der Brückensystemelemente von der Fertigungslinie eingerichtet ist.

2. Verfahren gemäss Anspruch 1, **dadurch gekennzeichnet,** dass dem zusammenhängenden Körper eine derartige Gestalt gegeben wird, dass er mit Hinblick auf eine vorzunehmende Fortbewegung auf einer im wesentlichen ebenen und kontinuierlichen Fortbewegungsebene, oder zu einem schwebenden Transport mittels geeigneter Transportorgan, ohne dass den Rohlingen oder den vorgeformten Gegenständen Deformationen zugefügt werden, eingerichtet ist.

3. Verfahren gemäss Anspruch 1, **dadurch gekennzeichnet,** dass der zusammenhängende Körper zum Zwecke seiner gesteuerten Fortbeweglichkeit mit seitlich vorspringenden Laschen ausgeformt ist, die zum Ergreifen durch oder zur Verbindung mit als Greiforganen ausgebildeten Fortbewegungsorganen eingerichtet sind.

4. Verfahren gemäss einem oder einem jeden der vorhergehenden Ansprüche 1-3, **dadurch gekennzeichnet**, dass zumindest einige der die Rohlinge oder die vorgeformten Gegenstände miteinander verbindenden Brücken die Gestalt eines zusammenhängenden, gitterähnlichen Körpers gegeben wird.

5. Anlage zur kontinuierlichen Herstellung von Gegenständen aus einem Faserbreimaterial, zu Durchführung des Verfahrens gemäss einem oder einem jeden der Patentansprüche 1-4, und von der Art, die aufweist
a) mindestens eine Saug-Formgebungs-Station (10, 12) zum Formen von Rohlingen oder vorgeformten Gegenständen (46) von zumindest annährend der gleichen Gestalt wie die der fertigen Gegenstände durch Ansaugen von Breimasse gegen eine flüssigkeitsdurchlässige Formfläche,
b) eine Trocknungsstation (18) zu vollständigen oder teilweisen Trocknung des somit hergestellten Rohlings oder des vorgeformten Gegenstandes,
c) mindestens eine Arbeitsstation zu Fertig-Herstellung des endgültigen Gegenstandes, und
d) eine Fortbewegungsbahn (20) zur Fortbewegung des Rohlings oder des vorgeformten Gegenstandes zu der Arbeitsstation oder den Arbeitsstationen,
**dadurch gekennzeichnet,**
e) dass die Saug-Formgebungs-Station (10, 12) eingerichtet ist zur Herstellung von zusammenhängenden Körpern (46, 48), die jeder aus einer Mehrzahl von Rohlingen oder vorgeformten Gegenständen (46) bestehen, welche miteinander durch Brücken (48) verbunden sind, wobei die zusammenhängenden Körper zur Fortbewegung entlang der Fortbewegungsbahn eingerichtet sind,
f) dass die Arbeitsstation oder die Arbeitsstationen für eine gleichzeitige Fertigbehandlung von Rohlingen oder vorgeformten Gegenstände in jedem zusammenhängenden Körper eingerichtet sind, und dass die Arbeitsstation oder die Arbeitsstationen zu diesem Zweck eine der Anzahl der Rohlinge oder vorgeformten Gegenstände entsprechende Anzahl von Arbeitsorganen aufweisen, die im wesentlichen in der gleichen Konfiguration wie die der Rohlinge oder der vorgeformten Gegenstände in dem zusammenhängenden Körper angeordnet sowie dazu eingerichtet sind, die Rohlinge oder vorgeformten Gegenstände im wesentlichen gleichzeitig zu bearbeiten, und
g) dass die Anlage zumindest eine Station aufweist (Fig. 10), die zu einem Durchbrechen der Brücken zum Zweck der gegenseitigen Freigabe der einzelnen fertigbearbeiteten Gegenstände (46) voneinander eingerichtet ist.

6. Anlage gemäss Anspruch 5, **dadurch gekennzeichnet,** dass die Fortbewegungsbahn mit Fortbewegungsorganen ausgestattet ist, die dazu eingerichtet sind, den zusammenhängenden Körper zu halten und in bei positiver mechanischer Steuerung entlang der Fortbewegungsbahn, wobei der zusammenhängende Körper auf dieser Bahn oder auf sich fortbewegende Tragorgane aufruht, zu bewegen.

7. Anlage gemäss Anspruch 5 oder 6, **dadurch gekennzeichnet,** dass die Durchbrechungsstation Organe zum Stapeln der durch die Durchbrechung erhaltenen, vereinzelten Gegenstände aufweist.

## Revendications

1. Procédé pour la fabrication continue d'objets à partir de pâte, ledit procédé comprenant les étapes consistant à :
a) mouler des ébauches ou des préformes ayant au moins approximativement la même forme que les objets finis en aspirant la masse de pâte contre une surface de moule perméable aux liquides,
b) retirer de la surface de moulage et sécher complètement ou partiellement les ébauches ou les préformes ainsi produites, et
c) exécuter un traitement de finition des ébauches ou préformes complètement ou partiellement séchées afin de fabriquer les objets finis, caractérisé en ce que
d) une combinaison de plusieurs ébauches ou préformes et des éléments comportant un système de pont interconnectant lesdites ébauches ou préformes sont moulés ensemble comme un corps entier ayant une résistance mécanique et une forme suffisante pour lui permettre, après avoir été retiré de la surface du moule et séché, d'être transporté de manière positive par des moyens de transport appropriés dans une chaîne de fabrication se composant d'un certain nombre de postes de travail séquentiellement situés dans la direction de transport, chaque poste de travail étant adapté pour réaliser sa propre opération de finition sur les ébauches ou préformes composant des parties de chaque corps entier, et pour libérer ultérieurement les ébauches ou préformes à partir du système de pont les interconnectant et pour retirer les ébauches ou préformes et les éléments du système de pont de la chaîne de fabrication.

2. Procédé selon la revendication 1, caractérisé en ce que l'on confère au corps entier une forme telle que, dans l'optique d'être transportée, elle peut reposer sur une surface de transport sensiblement plane et continue ou transportée en "flottant" par des moyens de support appropriés sans déformation de la forme ni des ébauches ou préformes individuelles.

3. Procédé selon la revendication 1, caractérisé en ce que pour être transportable de manière positive, le corps entier est moulé avec des pattes faisant saillie latéralement adaptées pour être saisies ou mises en prise par des moyens de transport sous la forme de moyens de préhension.

4. Procédé selon l'une quelconque des revendications 1 à 3, caractérisé en ce que l'on confère au moins à certains des ponts interconnectant les ébauches ou préformes, la forme d'un objet continu similaire à une grille.

5. Installation pour la fabrication en continu d'objets à partir de pâte tout en réalisant le procédé selon l'une quelconque des revendications 1 à 4 et du type comprenant
a) au moins un poste de moulage par aspiration (10, 12) pour mouler des ébauches ou préformes (46) ayant au moins approximativement la même forme que des objets finis en aspirant la masse de pâte contre une surface de moulage perméable aux liquides,
b) un poste de séchage (18) pour sécher complètement ou partiellement l'ébauche ou la préforme ainsi fabriquée,
c) au moins un poste de travail pour le traitement de finition de l'objet final, et
d) un chemin de transport (20) pour transporter l'ébauche ou la préforme jusqu'au(x) poste(s) de travail, caractérisée en ce que
d) le poste de moulage par aspiration (10, 12) est adapté pour fabriquer des corps entiers (46, 48) se composant chacun de plusieurs ébauches ou préformes (46) reliées mutuellement par des ponts (48), lesdits corps entiers étant adaptés pour être transportés le long dudit chemin de transport (20),
f) en ce que le(s) poste(s) de travail est/sont adapté(s) afin de traiter pour finition des ébauches ou préformes dans chaque corps entier simultanément, le(s) poste(s) à cette fin comprenant un certain nombre de moyens d'usinage correspondant au nombre d'ébauches ou préformes, lesdits moyens d'usinage étant placés dans sensiblement la même configuration que la configuration des ébauches ou préformes dans le corps entier et adaptés pour traiter les ébauches ou préformes sensiblement simultanément, et
g) en ce que l'installation comprend au moins un poste adapté pour briser les ponts dans l'optique de libérer les uns des autres les objets (46) traités pour finition.

6. Installation selon la revendication 5, caractérisé en ce que le chemin de transport (20) est muni de moyens de transport adaptés pour retenir le corps entier et déplacer ce dernier avec une commande mécanique positive le long du chemin de transport avec le corps entier reposant sur ce chemin ou sur les moyens de support de transport.

7. Installation selon la revendication 5 ou 6, caractérisé en ce que le poste pour briser les ponts comprend des moyens pour empiler les objets individuels fabriqués par l'étape de libération.
